(19) **Europäisches Patentamt**
**European Patent Office**
**Office européen des brevets**

(11) **EP 2 368 030 B1**

(12) **FASCICULE DE BREVET EUROPEEN**

(45) Date de publication et mention
de la délivrance du brevet:
**13.03.2013 Bulletin 2013/11**

(51) Int Cl.:
***B64C 11/48*** *(2006.01)*     ***F02C 7/36*** *(2006.01)*
***F02K 3/072*** *(2006.01)*     ***F02C 3/067*** *(2006.01)*

(21) Numéro de dépôt: **09774910.5**

(86) Numéro de dépôt international:
**PCT/EP2009/067446**

(22) Date de dépôt: **17.12.2009**

(87) Numéro de publication internationale:
**WO 2010/070066 (24.06.2010 Gazette 2010/25)**

(54) **SYSTÈME D'HÉLICES CONTRAROTATIVES ENTRAINÉES PAR UN TRAIN ÉPICYCLOÏDAL OFFRANT UNE RÉPARTITION DE COUPLE ÉQUILIBRÉE ENTRE LES DEUX HÉLICES**

SYSTEM MIT GEGENLÄUFIGEN PROPELLERN UNTER ANTRIEB VON EINEM PLANETENSATZ BEI GEWÄHRLEISTUNG EINER AUSGEGLICHENEN DREHMOMENTVERTEILUNG ZWISCHEN ZWEI PROPELLERN

SYSTEM INCLUDING COUNTER-ROTATING PROPELLERS DRIVEN BY AN EPICYCLIC TRAIN ENSURING A BALANCED COUPLE DISTRIBUTION BETWEEN THE TWO PROPELLERS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **19.12.2008 FR 0858822**

(43) Date de publication de la demande:
**28.09.2011 Bulletin 2011/39**

(73) Titulaire: **Snecma**
**75015 Paris (FR)**

(72) Inventeurs:
• **BALK, Wouter**
**F-77000 Melun (FR)**

• **CHARIER, Gilles, Alain**
**F-77130 La Grande Paroisse (FR)**
• **GALLET, François**
**F-75012 Paris (FR)**

(74) Mandataire: **Ilgart, Jean-Christophe et al**
**BREVALEX**
**95 rue d'Amsterdam**
**75378 Paris Cedex 8 (FR)**

(56) Documents cités:
**DE-A1- 3 933 776**     **DE-U1- 8 713 745**
**GB-A- 586 557**        **US-A- 2 526 409**
**US-A- 4 817 382**      **US-A- 5 054 998**

## Description

### DOMAINE TECHNIQUE

La présente invention se rapporte de façon générale à un système d'hélices contrarotatives, pour turbomachine d'aéronef.

L'invention concerne également une turbomachine pour aéronef comprenant un tel système d'hélices contrarotatives.

L'invention s'applique de préférence aux turbomachines pour aéronef, par exemple du type turboréacteur ou turbopropulseur. Elle s'applique plus particulièrement aux turbomachines dites à « open rotor », au sein desquelles une turbine libre de puissance entraîne les deux hélices contrarotatives, directement ou indirectement par l'intermédiaire d'un dispositif de transmission mécanique formant réducteur et comprenant notamment un train épicycloïdal. Dans ces systèmes d'hélices contrarotatives, les hélices sont donc dépourvues de carénage au niveau de leurs extrémités radiales externes.

### ETAT DE LA TECHNIQUE ANTERIEURE

De l'art antérieur, il est effectivement connu des turbomachines à systèmes d'hélices contrarotatives, dont les hélices sont entraînées par un dispositif de transmission mécanique, prenant habituellement la forme d'un réducteur différentiel. Ce réducteur différentiel comporte un train épicycloïdal particulier, dont le planétaire est entraîné en rotation par un rotor d'une turbine libre de puissance, dont le porte-satellites entraîne la première hélice, et dont la couronne entraîne la seconde hélice. A cet égard, il est noté qu'en fonction de la position des hélices contrarotatives par rapport à la turbine libre de puissance qui les entraîne, la première hélice constitue l'hélice aval et la seconde hélice, l'hélice amont, ou inversement. Quoi qu'il en soit, à la différence d'un train épicycloïdal simple, la couronne n'est pas fixe, mais mobile.

Avec un tel train épicycloïdal, les deux hélices ne peuvent subir les mêmes couples aérodynamiques. Les équations d'équilibre mécaniques des satellites montrent que ces deux couples ont nécessairement un rapport constant, dépendant des caractéristiques géométriques du réducteur. Ce rapport est nécessairement différent du rapport unitaire. En effet, le rapport entre le couple C1 appliqué à la première hélice et le couple C2 appliqué à la seconde hélice s'exprime de la manière suivante :

$$C1/C2 = (R + 1)/(R - 1) ;$$

avec R correspondant au rapport de réduction défini par le train épicycloïdal.

Ainsi, pour atteindre un rapport de couples proche de l'unité, il est nécessaire d'augmenter le rapport de réduction R, qui ne peut toutefois, pour des questions de faisabilité mécanique, être supérieur à 10. De plus, l'augmentation du rapport de réduction R se traduit inévitablement par une augmentation de la masse globale du système d'hélices, pénalisant la turbomachine.

Du fait du rapport non-unitaire entre les couples, l'une des deux hélices va générer plus de giration du flux secondaire que l'autre hélice, ce qui se traduit par une giration résiduelle du flux de sortie, limitant sensiblement le rendement de la propulsion et augmentant de façon néfaste le niveau acoustique de la turbomachine. Dans les faits, c'est la première hélice entraînée par le porte-satellites qui est toujours la plus chargée en termes de couple.

En outre, cette différence entre les deux couples génère également une sollicitation accrue des moyens servant à l'accrochage de la turbomachine sur l'aéronef, ces moyens devant par conséquent être surdimensionnés pour supporter la surcharge qui leur est appliquée. Un autre exemple de turbomachine à système d'hélices contrarotatives est décrit dans le document US4817382.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a tout d'abord pour objet un système d'hélices contrarotatives pour turbomachine d'aéronef, comprenant :

- une turbine libre de puissance comprenant un premier rotor ;
- une première hélice et une seconde hélice contrarotatives destinées à être mises en rotation autour d'un axe longitudinal du système d'hélices, par rapport à un stator de ce système ; et
- un dispositif de transmission mécanique comprenant un train épicycloïdal muni d'un planétaire centré sur ledit axe longitudinal et entraîné par ledit premier rotor de la turbine libre de puissance, au moins un satellite engrenant avec ledit planétaire, un porte-satellite(s) entraînant ladite première hélice, ainsi qu'une couronne engrenant avec chaque satellite et entraînant ladite seconde hélice.

Selon l'invention, ladite turbine libre de puissance comprend également un second rotor contrarotatif vis-à-vis dudit premier rotor, et entraînant en rotation ladite couronne.

L'invention prévoit donc avantageusement de combler le déficit de couple reçu par la seconde hélice en faisant en sorte que celle-ci soit en partie entraînée par le second rotor de la turbine libre de puissance, via la couronne du train épicycloïdal. En d'autres termes, le couple transmis à la seconde hélice par la couronne ne provient plus uniquement des satellites comme cela était le cas antérieurement, mais provient également du second rotor de la turbine de puissance, qui revêt donc un caractère contrarotatif.

Cette spécificité conduit à un équilibrage des deux couples transmis respectivement aux deux hélices, le rapport entre ces deux couples étant effectivement unitaire. La conséquence en est tout d'abord que les deux hélices vont générer chacune une giration du flux secondaire sensiblement identique, ce qui évite l'apparition néfaste d'une giration résiduelle du flux de sortie. Ainsi, le flux aérodynamique est bien redressé en sortie du système d'hélices, ce qui procure un meilleur rendement de propulsion ainsi qu'une diminution du niveau acoustique produit.

Par ailleurs, du fait de cet équilibrage des couples, les moyens servant à l'accrochage de la turbomachine sur l'aéronef sont moins sollicités mécaniquement, et peuvent par conséquent adopter une conception moins coûteuse en termes d'encombrement et de masse.

En outre, au sein de la turbine libre de puissance contrarotative, le premier rotor peut tourner moins rapidement que dans le cas d'une turbine classique, tout en conservant la même puissance délivrée en sortie de cette turbine. Cette diminution de la vitesse de rotation du premier rotor permet non seulement de faciliter et de simplifier sa conception, puisque les forces centrifuges qui lui sont appliquées sont moindres, mais permet également de réduire le rapport de réduction conféré par le train épicycloïdal, puisque la vitesse de son planétaire, entraîné par le premier rotor, est réduite. De ces deux avantages, il en découle évidemment un gain substantiel en termes de masse.

En outre, il est noté qu'un réducteur est caractérisé par un rendement mécanique, impliquant qu'une partie de la puissance transmise est transformée en chaleur. Etant donnée la puissance de quelques Mégawats fournie par une turbomachine d'aéronef, cette chaleur est très conséquente. Ces calories sont habituellement évacuées à l'aide d'un circuit d'huile, et un échangeur air-huile. L'installation de cet échangeur dans la nacelle constitue une contrainte majeure de l'intégration de l'ensemble propulsif, du fait de son encombrement, de sa masse et de sa traînée. Avec le train épicycloïdal mis en oeuvre selon l'invention, une partie de la puissance ne transite plus à travers le réducteur, mais est transmise directement à la seconde hélice. Par conséquent, la quantité des calories à dissiper dans l'échangeur est amoindrie, de sorte que ce dernier peut adopter un dimensionnement réduit. Ceci à donc un effet bénéfique sur la masse, l'encombrement et la traînée de l'échangeur air-huile.

L'invention est applicable à toutes les turbomachines, en particulier celles dites à « open rotor ». Dans ce dernier cas, l'invention s'applique que le système d'hélices soit disposé en amont ou en aval du générateur de gaz. Dans chacun de ces deux cas, au sein du système d'hélices, il peut être envisagé de placer la turbine de puissance en amont ou en aval des hélices contrarotatives. Cela est également applicable pour la position du train épicycloïdal vis-à-vis des hélices.

De préférence, ladite première hélice est l'hélice aval, et ladite seconde hélice est l'hélice amont. Cette disposition spécifique est en particulier retenue lorsque le système d'hélices est disposé en aval du générateur de gaz de la turbomachine, à savoir lorsque celle-ci adopte une conception assurant une propulsion, dite conception « pusher ». Naturellement, une conception inverse pourrait être envisagée, dans laquelle ladite première hélice serait l'hélice amont, et ladite seconde hélice serait l'hélice aval, sans sortir du cadre de l'invention. Cette autre solution est en particulier retenue lorsque le système d'hélices est disposé en amont du générateur de gaz de la turbomachine, à savoir lorsque celle-ci adopte une conception assurant une traction, dite conception « puller ».

Quelle que soit la conception envisagée parmi celles évoquée ci-dessus, il est de préférence fait en sorte que ledit premier rotor de la turbine libre de puissance, entraînant le planétaire, soit le rotor interne, et que ledit second rotor de la turbine libre de puissance, entraînant la couronne, soit le rotor externe, même si une conception inverse pourrait être envisagée, sans sortir du cadre de la présente invention.

De préférence, ledit porte-satellite(s) est solidaire de ladite première hélice, et ladite couronne est solidaire de ladite seconde hélice et dudit second rotor de la turbine libre de puissance.

De préférence, les première et seconde hélices disposent chacune d'un système de calage variable de leurs pales. De façon connue, ces systèmes sont pilotés de manière à ce que la vitesse de rotation des deux hélices soit maintenue sensiblement constante en fonctionnement, quel que soit le régime moteur.

L'invention a par ailleurs pour objet une turbomachine pour aéronef comprenant un système d'hélices contrarotatives tel que décrit ci-dessus, cette turbomachine étant par exemple un turbopropulseur, mais pouvant alternativement être un turboréacteur à soufflante contrarotative. Naturellement, dans ce dernier cas, le dispositif de transmission mécanique précité est destiné à mouvoir la soufflante contrarotative du turboréacteur. De préférence, comme mentionné ci-dessus, l'invention s'applique plus particulièrement aux turbomachines dites à « open rotor », au sein desquelles la turbine libre de puissance entraîne les deux hélices contrarotatives, indirectement par l'intermédiaire d'un dispositif de transmission mécanique formant réducteur et comprenant notamment un train épicycloïdal.

D'autres avantages et caractéristiques de l'invention apparaîtront dans la description détaillée non limitative ci-dessous.

## BRÈVE DESCRIPTION DES DESSINS

Cette description sera faite au regard des dessins annexés parmi lesquels ;

- la figure 1 représente une vue schématique en demi-coupe longitudinale d'une turbomachine pour aéronef, selon un mode de réalisation préféré de la présente invention ;
- la figure 2 représente une vue agrandie du système d'hélices contrarotatives équipant la turbomachine montrée sur la figure 1 ; et
- la figure 3 représente une vue en coupe prise le long de la ligne III-III de la figure 2.

## EXPOSÉ DÉTAILLÉ DE MODES DE RÉALISATION PRÉFÉRÉS

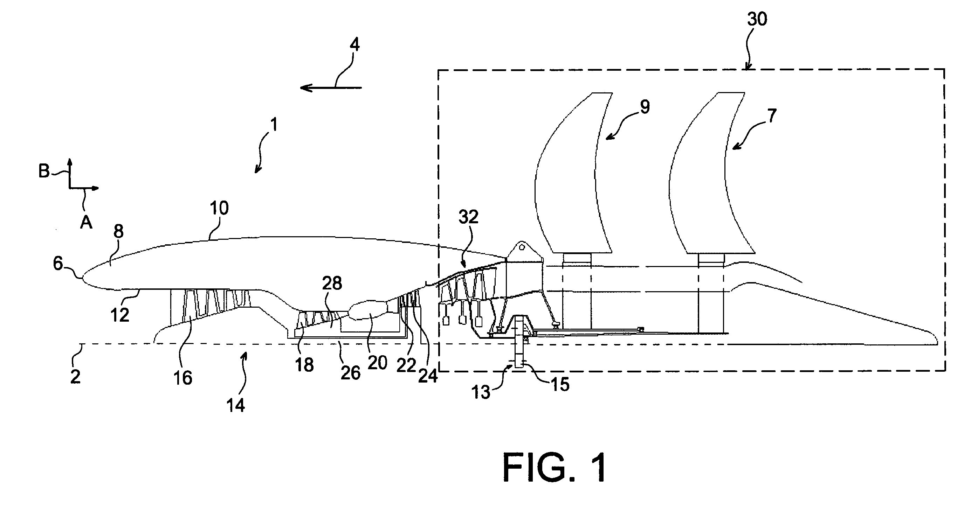

En référence à la figure 1, on peut apercevoir une turbomachine 1 du type à « open rotor », selon un mode de réalisation préféré de la présente invention.

Sur les figures, la direction A correspond à la direction longitudinale ou direction axiale, parallèle à l'axe longitudinal 2 de la turbomachine. La direction B correspond quant à elle à la direction radiale de la turbomachine. De plus, la flèche 4 schématise la direction d'avancement de l'aéronef sous l'action de la poussée de la turbomachine 1, cette direction d'avancement étant contraire au sens principal d'écoulement des gaz au sein de la turbomachine. Les termes « avant », « amont », « arrière », « aval » utilisés dans la suite de la description sont à considérer par rapport à ladite direction d'avancement 4.

En partie avant, la turbomachine présente une entrée d'air 6 se poursuivant vers l'arrière par une nacelle 8, celle-ci comportant globalement une peau extérieure 10 et une peau intérieure 12, toutes les deux centrées sur l'axe 2 et décalées radialement l'une de l'autre.

La peau intérieure 12 forme carter radial externe pour un générateur de gaz 14, comprenant de façon classique, de l'avant vers l'arrière, un compresseur basse pression 16, un compresseur haute pression 18, une chambre de combustion 20, une turbine haute pression 22, et une turbine de pression intermédiaire 24. Le compresseur 16 et la turbine 24 sont reliées mécaniquement par un arbre 26, formant ainsi un corps de faible pression, tandis que le compresseur 18 et la turbine 22 sont reliées mécaniquement par un arbre 28, formant un corps de pression plus élevée. Par conséquent, le générateur de gaz 14 présente de préférence une conception classique, dite à double corps.

En aval de la turbine de pression intermédiaire 24, se trouve un système d'hélices contrarotatives 30, formant récepteur de la turbomachine.

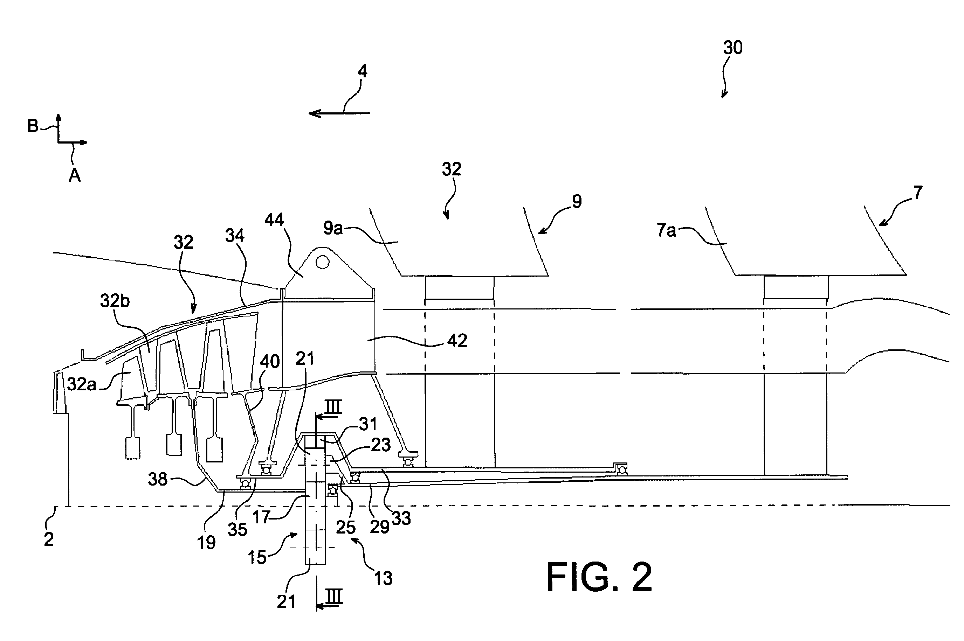

Ce système 30 comprend une turbine libre de puissance 32, formant turbine basse pression, et qui a la particularité d'être contrarotative. En effet, en référence plus précisément à la figure 2, elle comporte un premier rotor 32a constituant le rotor interne de la turbine contrarotative, ainsi qu'un second rotor 32b constituant le rotor externe de cette turbine, ce second rotor 32b étant également dénommé tambour externe.

Le système d'hélices 30 comprend un stator ou carter 34, centré sur l'axe longitudinal 2 du système, et renfermant notamment ladite turbine libre de puissance 32. Ce stator 34 est de façon connue destiné à être solidaire des autres carters de la turbomachine. A cet égard, il est indiqué que le système d'hélices 30 est de préférence conçu de sorte que les hélices soient dépourvues de carénage radial extérieur les entourant, comme visible sur les figures.

De plus, en aval de la turbine contrarotative 32, le système d'hélices 30 intègre une première hélice 7 ou hélice aval, portant des pales 7a. De manière analogue, le système 30 comprend une seconde hélice 9 ou hélice amont, portant des pales 9a. Ainsi, les hélices 7, 9 sont décalées l'une de l'autre selon la direction 4, et toutes les deux situées en aval de la turbine libre 32.

Les deux hélices 7, 9 sont destinées à tourner dans des sens opposés autour de l'axe 2 sur lequel elles sont centrées, les rotations s'effectuant par rapport au stator 34 restant immobile.

Pour l'entraînement en rotation de ces deux hélices 7, 9, il est prévu un dispositif de transmission mécanique 13, formant réducteur et comprenant notamment un train épicycloïdal 15.

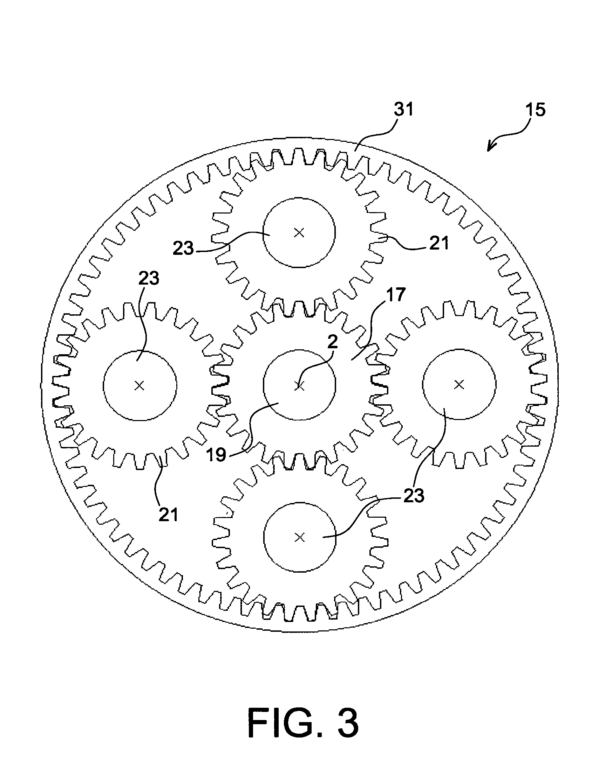

En référence aux figures 2 et 3, le train 15 est muni d'un planétaire 17 centré sur l'axe longitudinal 2, et porté par un arbre planétaire 19 de même axe, relié solidairement vers l'amont au premier rotor 32a, par le biais d'une bride 38. Ainsi, le rotor 32a entraîne directement le planétaire 17 en rotation, ce dernier prenant la forme d'une roue dentée extérieurement.

Le train 15 comporte également un satellite 21, et de préférence plusieurs comme cela est visible sur la figure 3, chacun d'eux engrenant avec le planétaire 17. Chaque satellite 21 est porté par un arbre satellite 23 d'axe excentré par rapport à l'axe 2, et prend la forme d'une roue dentée extérieurement.

En outre, le train 15 est équipé d'un porte-satellites 25 centré sur l'axe longitudinal 2, et portant de manière rotative chacun des satellites 21, par l'intermédiaire des arbres 23, respectivement. Le porte-satellites 25 est porté par un arbre de porte-satellites 29 de même axe, solidaire de la première hélice 7, comme cela est visible sur la figure 2, de manière à pouvoir l'entraîner directement en rotation.

Enfin, le train 15 dispose d'une couronne 31 centrée sur l'axe 2 et portée par un arbre de couronne 33 de même axe, cette couronne 31 engrenant avec chaque satellite 21. L'arbre 33 s'étend vers l'aval en étant solidaire de la seconde hélice 9, de manière à pouvoir l'entraîner directement en rotation. Par exemple, cet arbre 33 se trouve situé autour de l'arbre de porte-satellites 29 avec lequel il est concentrique, comme montré sur les figures.

La couronne 31, prenant la forme d'une roue dentée intérieurement, présente la particularité additionnelle d'être également portée par un autre arbre de couronne 35, de même axe, et s'étendant quant à lui vers l'amont. Cet arbre de couronne 35, situé autour de l'arbre planétaire 19 avec lequel il est concentrique, est relié solidairement au second rotor 32b, par le biais d'une bride 40. Ainsi, le rotor 32b participe également directement à l'entraînement de la couronne 31, et donc à l'entraînement de l'hélice amont 9. Cela permet d'obtenir un rapport unitaire entre les couples transmis respectivement à l'hélice aval 7 et à l'hélice amont 9, pour l'obtention d'un meilleur rendement de la turbomachine.

Enfin, il est noté que dans ce mode de réalisation préféré, dans lequel chaque hélice est équipée d'un système de calage variable de ses pales, le train épicycloïdal 15 se situe au droit et à l'intérieur d'un carter 42 séparant la turbine libre de puissance contrarotative 32 et les hélices 7, 9. Ce carter 42, également dénommé carter d'échappement ou encore « static frame », porte une attache moteur 44 destinée à assurer l'accrochage de la turbomachine sur la structure de l'aéronef.

Bien entendu, diverses modifications peuvent être apportées par l'homme du métier à l'invention qui vient d'être décrite, uniquement à titre d'exemples non limitatifs.

## Revendications

1. Système d'hélices contrarotatives (30) pour turbomachine d'aéronef, comprenant :

   - une turbine libre de puissance (32) comprenant un premier rotor (32a) ;
   - une première hélice (7) et une seconde hélice (9) contrarotatives destinées à être mises en rotation autour d'un axe longitudinal (2) du système d'hélices, par rapport à un stator (34) de ce système ; et
   - un dispositif de transmission mécanique (13) comprenant un train épicycloïdal (15) muni d'un planétaire (17) centré sur ledit axe longitudinal (2) et entraîné par ledit premier rotor (32a) de la turbine libre de puissance, au moins un satellite (21) engrenant avec ledit planétaire (17), un porte-satellite(s) (25) entraînant ladite première hélice (7), ainsi qu'une couronne (31) engrenant avec chaque satellite (21) et entraînant ladite seconde hélice (9),

   **caractérisé en ce que** ladite turbine libre de puissance (32) comprend également un second rotor (32b) contrarotatif vis-à-vis dudit premier rotor (32a), et entraînant en rotation ladite couronne (31).

2. Système d'hélices contrarotatives selon la revendication 1, **caractérisé en ce que** ladite première hélice (7) est l'hélice aval, et **en ce que** ladite seconde hélice (9) est l'hélice amont.

3. Système d'hélices contrarotatives selon la revendication 1 ou la revendication 2, **caractérisé en ce que** ledit premier rotor (32a) de la turbine libre de puissance est le rotor interne, et **en ce que** ledit second rotor (32b) de la turbine libre de puissance est le rotor externe.

4. Système d'hélices contrarotatives selon l'une quelconque des revendications précédentes, **caractérisé en ce que** ledit porte-satellite(s) (25) est solidaire de ladite première hélice (7), et **en ce que** ladite couronne (31) est solidaire de ladite seconde hélice (9) et dudit second rotor (32b) de la turbine libre de puissance.

5. Système d'hélices contrarotatives selon l'une quelconque des revendications précédentes, **caractérisé en ce que** les première et seconde hélices (7, 9) disposent chacune d'un système de calage variable de leurs pales.

6. Turbomachine pour aéronef comprenant un système d'hélices contrarotatives (30) selon l'une quelconque des revendications précédentes.

7. Turbomachine selon la revendication 6, **caractérisée en ce qu'**elle est un « open rotor ».

## Claims

1. A system of contra-rotating propellers (30) for aircraft turbomachine, including:

   - a free power turbine (32) including a first rotor (32a);
   - a first contra-rotating propeller (7) and a second contra-rotating propeller (9) intended to be rotated around a lengthways axis (2) of the propeller system, relative to a stator (34) of this system; and
   - a mechanical transmission system (13) including a planetary gear train (15) fitted with a sun gear (17) centred on the said lengthways axis (2) and driven by the said first rotor (32a) of the free power turbine, where at least one planet gear (21) engages with the said sun gear (17), where one or more planet gear carrier(s) (25) drive(s) the said first propelled (7), together with a ring (31) engaging with each planet gear (21) and driving the said second propeller (9),

   **characterised in that** the said free power turbine (32) also includes a second rotor (32b) which is contra-rotating relative to the said first rotor (32a), and rotating the said ring (31).

2. A system of contra-rotating propellers according to claim 1, **characterised in that** the said first propeller (7) is the downstream propeller, and **in that** the said second propeller (9) is the upstream propeller.

3. A system of contra-rotating propellers according to claim 1 or claim 2, **characterised in that** the said first rotor (32a) of the free power turbine is the internal rotor, and **in that** the said second rotor (32b) of the free power turbine is the external rotor.

4. A system of contra-rotating propellers according to any of the previous claims, **characterised in that** the said planet gear carrier(s) (25) is/are integral with the said first propeller (7), and **in that** the said ring (31) is integral with the said second propeller (9) and the said second rotor (32b) of the free power turbine.

5. A system of contra-rotating propellers according to any of the previous claims, **characterised in that** the first and second propellers (7, 9) each has a system of variable adjustment of their blades.

6. A turbomachines for aircraft including a system of contra-rotating propellers (30) according to any of the previous claims.

7. A turbomachine according to claim 6, **characterised in that** it is an "open rotor" turbomachine.

**Patentansprüche**

1. System von gegenläufigen Propellern (30) für eine Turbomaschine eines Luftfahrzeugs, umfassend:

   - eine Freilaufleistungsturbine (32), die einen ersten Rotor (32a) umfasst,
   - einen ersten Propeller (7) und einen zweiten Propeller (9), welche gegenläufg und dazu bestimmt sind, um eine Längsachse (2) des Propellersystems gegenüber einem Stator (34) dieses Systems in Rotation versetzt zu werden, und
   - eine mechanische Übertragungsvorrichtung (13), umfassend ein Planetengetriebe (15), das mit einem Sonnenrad (17), welches um die Längsachse (2) zentriert und über den ersten Rotor (32a) der Freilaufleistungsturbine angetrieben wird, versehen ist, wenigstens ein Satellitenrad (21), das mit dem Sonnenrad (17) kämmt, einen Satellitenrad-Träger (25), der den ersten Propeller (7) antreibt, sowie einen Kranz (31), der mit jedem Satellitenrad (21) kämmt und den zweite Propeller (9) antreib,

   **dadurch gekennzeichnet, dass** die Freilaufleistungsturbine (32) auch einen zweiten Rotor (32b) umfasst, der zu dem ersten Rotor (32a) gegenläufig ist und den Kranz (31) drehantreibt.

2. System von gegenläufigen Propellern nach Anspruch 1, dadurch gekennzeichet, dass der erste Propeller (7) der nachgeordnete Propeller ist und dass der zweite Propeller (9) der vorgeordnete Propeller ist.

3. System von gegenläufigen Propellern nach Anspruch 1 oder Anspruch 2, **dadurch gekennzeichnet, dass** der erste Rotor (32a) der Freilaufleistungsturbine der Innenrotor ist und dass der zweite Rotor (32b) der Freilaufleistungsturbine der Außenrotor ist.

4. System von gegenläufigen Propellern nach einem der vorhergehenden Ansprüche, **dadurch gekennzeichnet, dass** der Satellitenrad-Träger (25) mit dem ersten Propellern (7) fest verbunden ist und dass der Kranz (31) mit dem zweiten Propeller (9) und mit dem zweiten Rotor (32b) der Freilaufleistungsturbine fest verbunden ist.

5. System von gegenläufigen Propellern nach einem der vorhergehenden Ansprüche, **dadurch gekennzeichnet, dass** der erste und der zweite Propeller (7, 9) jeweils über ein System zur variablen Einstellung ihrer Blätter verfügen.

6. Turbomaschine für ein Luftfahrzeug, umfassend ein System von gegenläufigen Propellern (30) nach einem der vorhergehenden Ansprüche.

7. Turbomaschine nach Anspruch 6, **dadurch gekennzeichnet, dass** sie ein "Open Rotor" ist.

FIG. 1

EP 2 368 030 B1

FIG. 2

EP 2 368 030 B1

FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4817382 A